# EUROPÄISCHE PATENTSCHRIFT

(11) **EP 3 164 431 B1**
(45) Veröffentlichungstag und Bekanntmachung des Hinweises auf die Patenterteilung: **12.02.2020**
(21) Anmeldenummer: 15728547.9
(22) Anmeldetag: 15.06.2015
(51) Int. Cl.: C08F 220/14, C08F 220/18, C08F 236/10, C09J 4/00, C09J 133/06

(54) **VERFAHREN ZUM KLEBEN VON SUBSTRATEN AUF KALTE UND FEUCHTE OBERFLÄCHEN**
METHOD FOR ADHERING SUBSTRATES ON COLD AND MOIST SURFACES
PROCÉDÉ DE COLLAGE D'UN SUBSTRAT SUR DES SURFACES FROIDES ET HUMIDES

(30) Priorität: 02.07.2014 EP 14175448
(43) Veröffentlichungstag der Anmeldung: 10.05.2017
(73) Patentinhaber: BASF SE, 67056 Ludwigshafen am Rhein (DE)
(72) Erfinder: DIMMER, Jörg-Alexander, 68161 Mannheim (DE); GROSS, Michael, 68165 Mannheim (DE); FONSECA, Gledison, 68161 Mannheim (DE); MUELLER, Miriam, 66440 Blieskastel (DE); HUBERT, Anja, 67071 Ludwigshafen (DE)
(74) Vertreter: BASF IP Association
(86) Internationale Anmeldenummer: PCT/EP2015/063267
(87) Internationale Veröffentlichungsnummer: WO 2016/000938

(56) Entgegenhaltungen:
- DE-A1- 10 359 359
- US-A- 5 623 011
- US-A1- 2010 092 774
- US-B1- 6 927 267

## Beschreibung

Die Erfindung betrifft ein Verfahren und dafür geeignete Haftklebestoffzusammensetzungen zum Kleben eines Substrates auf kalte und feuchte Oberflächen, wobei die Oberflächentemperatur niedriger ist als die Taupunkttemperatur der mit der Oberfläche in Kontakt stehenden Luft und wobei die Haftklebstoffzusammensetzung ein Haftklebstoffpolymer enthält, welches gebildet ist aus bestimmten Mengen an 2-Ethylhexylacrylat, Monomeren, ausgewählt aus C1 bis C2 Alkyl(meth)acrylaten, Styrol, Säuremonomeren und optional weiteren Monomeren in Gegenwart von Molekulargewichtsreglern.

Haftklebstoffe auf Basis von wässrigen Polymerdispersionen, welche durch Emulsionspolymerisation erhältlich sind, sind lange bekannt. Insbesondere handelt es sich dabei um Poly(meth)acrylate. Es handelt sich dabei in der Regel um Copolymere, bei denen mindestens eines der Monomere ein Acrylsäureester ist, welcher Polymere mit relativ niedriger Glasübergangstemperatur bildet, beispielsweise n-Butylacrylat oder 2-Ethylhexylacrylat. Bekannte Acrylatcopolymere auf Basis von n-Butylacrylat haben zwar bei Raumtemperatur ausreichende adhäsive Eigenschaften zur Herstellung von selbstklebenden Etiketten. Aufgrund der Temperaturabhängigkeit der Oberflächenklebrigkeit nimmt aber die Oberflächenklebrigkeit bei niedrigeren Temperaturen deutlich ab. Es werden daher Haftklebstoffpolymere gewünscht, welche auch bei Temperaturen deutlich unterhalb von Raumtemperatur noch eine gute Oberflächenklebrigkeit aufweisen, insbesondere gegenüber hydrophoben Oberflächen wie z.B. Polyethylen. Ein besonderes Problem stellt sich, wenn die Oberflächen nicht nur kalt sind, d.h. eine Oberflächentemperatur deutlich unterhalb Raumtemperatur aufweisen, sondern wenn die Oberflächen zusätzlich auch feucht sind. Feuchte Oberflächen bilden sich z.B. dann, wenn die Oberflächentemperatur niedriger ist als die Taupunkttemperatur der mit der Oberfläche in Kontakt stehenden feuchten, d.h. Wasserdampf enthaltenden Luft. Bei derartigen Anwendungen zeigen Haftklebstoffe auf Basis von Polyacrylaten häufig eine zu geringe Haftung.

Deshalb werden für diese Anwendung häufig sogenannte Hotmelts (z.B. Styrol-Isopren-Styrol Polymere, SIS) verwendet. Diese Hotmelts zeigen sehr gute Klebrigkeit von Substraten auf kalten und feuchten Oberflächen, haben aber den Nachteil, dass sie aufgrund von häufig enthaltenen Additiven keine lebensmittelrechtliche Zulassung haben und die Verarbeitungsviskositäten gegenüber Dispersionsklebstoffen vergleichsweise hoch sind, was zu geringen Beschichtungsgeschwindigkeiten führt.

In der EP 1342762 A1 werden Polymerdispersionen für Haftklebstoffanwendungen in einem weiten Temperaturbereich beschrieben. Anwendungen auf feuchten Oberflächen werden nicht beschrieben. Die Polymere basieren auf C1 bis C20 Alkyl(meth)acrylaten, ethylenisch ungesättigten Carbonsäuremonomeren, C2 bis C8 Hydroxyalkyl(meth)acrylaten und optional weiteren Monomeren.

In der WO 96/05248 werden Haftklebstoffe mit gutem Tieftemperaturverhalten beschrieben. Anwendungen auf feuchten Oberflächen werden nicht beschrieben. Die Polymere basieren auf C4 bis C8 Alkylacrylaten, bestimmten Vinylestern, bestimmten Dicarbonsäurediestern und bestimmten ethylenisch ungesättigten Carbonsäuremonomeren. Die Dicarbonsäurediestermonomere lassen sich nur schlecht mit Standardacrylatmonomeren copolymerisieren.

In der WO 2011/054719 werden Haftklebstoffe beschrieben mit guter Haftung auf unpolaren Oberflächen bei niedrigen Temperaturen. Anwendungen auf feuchten Oberflächen werden nicht beschrieben. Die Haftklebstoffe enthalten Haftklebstoffpolymere aus n-Butylacrylat, Ethylacrylat, Vinylacetat, Säuremonomeren und optional weiteren Monomeren.

In der US 2010/0092774 werden Haftklebstoffe für Papieretiketten beschrieben. Die Haftklebstoffe enthalten ein Emulsionspolymerisat aus bestimmten Mengen an C6- bis C10-Alkyl(meth)acrylaten, Methylmethacrylat, Vinylaromaten, Hydroxyalkyl(meth)acrylaten und Monomeren mit Säure- oder Säureanhydridgruppen.

In der DE 103 59 359 A1 werden Reaktionsharze auf Methacrylatbasis beschrieben. Aufgabe der vorliegenden Erfindung war es, Haftklebstoffe zur Verfügung zu stellen für die Verwendung zur Verklebung von Substraten auf feuchten und kalten Oberflächen, wobei die Haftung auf feuchten und kalten Oberflächen möglichst gut, die Chancen für lebensmittelrechtliche Zulassungen möglichst hoch, die Verarbeitungsviskositäten möglichst gering und die erreichbaren Beschichtungsgeschwindigkeiten möglichst hoch sein sollten.

Demgemäß wurde das nachfolgend näher erläuterte Verfahren gefunden.

Gegenstand der Erfindung ist ein Verfahren zum Kleben eines Substrates auf kalte und feuchte Oberflächen, wobei
(1) eine Haftklebstoffzusammensetzung zur Verfügung gestellt wird, welche mindestens ein Haftklebstoffpolymer enthält, welches gebildet ist aus
   (i) 50 - 95 Gew.-% 2-Ethylhexylacrylat,
   (ii) 1 - 25 Gew.% mindestens eines Monomers, ausgewählt aus C1 bis C2 Alkyl(meth)acrylaten,
   (iii) 1 - 10 Gew.% Styrol,
   (iv) 0,1 - 5 Gew.% mindestens einer ethylenisch ungesättigten Säure oder mindestens eines ethylenisch ungesättigten Säureanhydrids,
   (v) 0 bis 10 Gew.% weiteren, von den Monomeren (i) bis (iv) verschiedenen ethylenisch ungesättigten Verbindungen,
   wobei sich die Mengenangaben der Monomere jeweils auf die Gesamtmenge an Monomeren beziehen und wobei die Polymerisation der Monomere in Gegenwart von mindestens 0,01 Gewichtsteilen Molekulargewichtsregler pro 100 Gewichtsteile Monomere erfolgt;
(2) die Haftklebstoffzusammensetzung auf ein Substrat aufgebracht wird und
(3) das Substrat auf eine Oberfläche aufgebracht wird, dessen Oberflächentemperatur niedriger ist als die Taupunkttemperatur der mit der Oberfläche in Kontakt stehenden Luft.

Die Gew.-%-Angaben beziehen sich jeweils auf die Summe aller bei der Polymerisation eingesetzten Monomere.

Gegenstand der Erfindung ist auch die in dem erfindungsgemäßen Verfahren einsetzbare Haftklebstoffzusammensetzung.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Im Folgenden werden gelegentlich die Bezeichnung "(Meth)acryl..." und ähnliche Bezeichnungen als abkürzende Schreibweise verwendet für "Acryl... oder Methacryl...".

In der Bezeichnung Cx-Alkyl(meth)acrylat und analogen Bezeichnungen bedeutet x die Anzahl der C-Atome der Alkylgruppe.

Kalte Oberflächen sind Oberflächen mit einer Oberflächentemperatur von insbesondere mindestens 10 °C unterhalb der Umgebungstemperatur. Feuchte Oberflächen sind Oberflächen, auf denen sich Feuchtigkeit z.B. in Form von Wassertröpfchen oder in Form eines Wasserfilms befindet. Kalte und feuchte Oberflächen sind Oberflächen, deren Oberflächentemperatur niedriger ist als die Taupunkttemperatur der mit der Oberfläche in Kontakt stehenden (feuchten) Luft und auf denen sich aufgrund dessen Feuchtigkeit (z.B. in Form von Wassertröpfchen oder in Form eines Wasserfilms) niedergeschlagen hat. Dabei ist die Oberflächentemperatur vorzugsweise kleiner als 20°C, kleiner als 10 °C oder kleiner als 0°C und vorzugsweise mindestens 10 °C geringer als die Umgebungstemperatur. Die relative Luftfeuchtigkeit der Umgebungsluft ist vorzugsweise mindestens 40% oder mindestens 50%.

Hauptmonomer ist 2-Ethylhexylacrylat, welches in einer Menge von 50 - 95 Gew.-%, vorzugsweise von 60 - 90 Gew.% oder von 70 - 90 Gew.-% eingesetzt wird.

Als Monomer (ii) werden 1 - 25 Gew.%, vorzugsweise von 5 - 25 Gew.% oder 10 bis 25 Gew.% mindestens eines Monomers, ausgewählt aus C1 bis C2 Alkyl(meth)acrylaten eingesetzt. Bei den Monomeren (ii) handelt es sich vorzugsweise um Methylacrylat, Methylmethacrylat, Ethylacrylat oder deren Gemisch, wobei Ethylacrylat alleine oder im Gemisch mit Methylmethacrylat besonders bevorzugt sind.
Das Gewichtsmengenverhältnis von 2-Ethylhexylacrylat zu Monomeren (ii), insbesondere das Gewichtsmengenverhältnis von 2-Ethylhexylacrylat zu Ethylacrylat beträgt vorzugsweise von 2:1 bis 8:1.

Styrol wird in einer Menge von 1 - 10 Gew.%, vorzugsweise von 1,5 bis 8 Gew.% oder von 1,5 bis 5 Gew.% eingesetzt. Das Gewichtsmengenverhältnis von 2-Ethylhexylacrylat zu Styrol ist vorzugsweise von 20:1 bis 50:1.

Ethylenisch ungesättigte Säuren oder ethylenisch ungesättigte Säureanhydride (Säuremonomere iv) werden in einer Menge von 0,1 - 5 Gew.-%, vorzugsweise von 0,2 - 3 Gew.% eingesetzt. Geeignet sind beispielsweise Monomere mit Carbonsäure-, Sulfonsäure- oder Phosphonsäuregruppen. Bevorzugt sind Carbonsäuregruppen. Genannt seien z.B. Acrylsäure, Methacrylsäure, Itaconsäure, Maleinsäure oder Fumarsäure. Die Säuregruppen können in Form ihrer Salze vorliegen. Besonders bevorzugt sind Acrylsäure und Methacrylsäure.

Das Klebstoffpolymer kann aus weiteren Monomeren (v) aufgebaut sein. Die weiteren, von den Monomeren (i) bis (iv) verschiedenen Monomere (v) sind copolymerisierbare, ethylenisch ungesättigte Verbindungen. Sie können in Mengen von 0 bis 10 Gew.%, vorzugsweise von 0,1 - 8 Gew.% eingesetzt werden. Die weiteren Monomere (v) sind vorzugsweise ausgewählt aus der Gruppe bestehend aus von 2-Ethylhexylacrylat verschiedenen C3 bis C20-Alkyl(meth)acrylaten, Vinylestern von bis zu 20 C-Atome enthaltenden Carbonsäuren, von Styrol verschiedenen Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen, Hydroxylgruppen enthaltende Monomere, insbesondere C₁-C₁₀-Hydroxyalkyl(meth)acrylate, (Meth)acrylamid oder Mischungen dieser Monomere. Als weitere Monomere seien darüber hinaus Pheny-loxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. C₁-C₂₀-Alkyl(meth)acrylate weisen 1-20 C-Atome in den Alkylgruppen auf. C₁-C₁₀-Hydroxyalkyl(meth)acrylate weisen 1-10 C-Atome in den Hydroxyalkylgruppen auf. Als weitere Monomere seien auch vernetzende Monomere genannt.

Geeignete Monomere sind z.B. (Meth)acrylsäurealkylester mit einem C₃-C₁₀-Alkylrest. Insbesondere sind auch Mischungen der (Meth)acrylsäurealkylester geeignet. Vinylester von Carbonsäuren mit 1 bis 20 C-Atomen sind z.B. Vinylacetat, Vinyllaurat, Vinylstearat, Vinylpropionat und Versaticsäurevinylester. Als vinylaromatische Verbindungen kommen Vinyltoluol, alpha- und p-Methylstyrol, alpha-Butylstyrol, 4-n-Butylstyrol, 4-n-Decylstyrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren.

Als weitere Monomere (v) bevorzugt sind C₃- bis C₁₀-Alkylacrylate und C₃- bis C₁₀-Alkylmethacrylate, insbesondere C₃- bis C₈-Alkylacrylate und C₃- bis C₈-Alkylmethacrylate und Vinylester, insbesondere Vinylacetat und deren Mischungen sowie C2 bis C10 Hydroxyalkyl(meth)acrylate. Ganz besonders bevorzugt sind n-Hexylacrylat, Octylacrylat, Vinylacetat und Hydroxypropylacrylat sowie Mischungen dieser Monomere.

Die weiteren Monomere werden im Allgemeinen in untergeordneten Mengen eingesetzt, ihr Anteil liegt insgesamt vorzugsweise unter 10 Gew. %, insbesondere unter 8 Gew. %.

In einer Ausführungsform ist das Haftklebstoffpolymer gebildet aus
(i) 70 - 90 Gew.-% 2-Ethylhexylacrylat ,
(ii) 10-25 Gew.% mindestens eines Monomers, ausgewählt aus Ethylacrylat, Methylacrylat und Methylmethacrylat ,
(iii) 1 - 10 Gew.% Styrol,
(iv) 0,2 - 3 Gew.% mindestens einer ethylenisch ungesättigten Säure ausgewählt aus Acrylsäure, Methacrylsäure und deren Gemisch, und
(v) 0 bis 10 Gew.% anderer, von den Monomeren (i) bis (iv) verschiedener ethylenisch ungesättigter Verbindungen.

In einer Ausführungsform ist das Haftklebstoffpolymer gebildet aus
(i) 70 - 90 Gew.-% 2-Ethylhexylacrylat ,
(ii) 10-25 Gew.% Ethylacrylat oder eines Gemisches von Ethylacrylat mit, Methylacrylat und/oder Methylmethacrylat ,
(iii) 1 - 8 Gew.% Styrol,
(iv) 0,2 - 3 Gew.% mindestens einer ethylenisch ungesättigten Säure ausgewählt aus Acrylsäure, Methacrylsäure und deren Gemisch, und
(v) 0 bis 10 Gew.% oder 0,1 bis 10 Gew.% Vinylacetat.

Die erfindungsgemäßen Klebstoffpolymere sind durch radikalische Polymerisation von ethylenisch ungesättigten Verbindungen (Monomeren) erhältlich. Die Herstellung der Polymere erfolgt vorzugsweise durch Emulsionspolymerisation, es handelt sich daher vorzugsweise um Emulsionspolymerisate. Gegenstand der Erfindung sind deshalb auch Haftklebstoffdispersionen, enthaltend ein in Wasser dispergiertes, durch Emulsionspolymerisation hergestelltes erfindungsgemäßes Haftklebstoffpolymer.

Bei der Emulsionspolymerisation werden ethylenisch ungesättigte Verbindungen (Monomere) in Wasser polymerisiert, wobei ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Die grenzflächenaktiven Substanzen werden üblicherweise in Mengen von 0,1 bis 10 Gew.-Teilen, vorzugsweise 0,2 bis 5 Gew.-Teilen bezogen auf 100 Gew.-Teile der zu polymerisierenden Monomeren verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Trialkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel 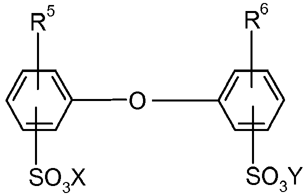 worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax® 2A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Bei der Polymerisation werden Molekulargewichtsregler eingesetzt in Mengen von mindestens 0,01 Gewichtsteilen Molekulargewichtsregler pro 100 Gewichtsteile Monomere, z.B. von 0,01 bis 0,8 Gew.-Teile, oder von 0,01 bis 0,1 Gewichtsteile auf 100 Gew.-Teile der zu polymerisierenden Monomeren. Hierdurch kann durch eine Kettenabbruchsreaktion die Molmasse des Emulsionspolymerisats kontrolliert bzw. verringert werden. Die Regler werden dabei an das Polymer gebunden, im Allgemeinen an das Kettenende.

Geeignete Regler sind z.B. organische Verbindungen die Schwefel in gebundener Form enthalten (z.B. Verbindungen mit einer Thiolgruppe), aliphatische und/oder araliphatische Halogenverbindungen, aliphatische und/oder aromatische Aldehyde, ungesättigte Fettsäuren (wie z.B. Ölsäure), Diene mit nicht konjugierten Doppelbindungen (wie z.B. Divinylmethan, Terpinolen oder Vinylcyclohexen), Kohlenwasserstoffe mit leicht abstrahierbaren Wasserstoffatomen (wie z.B. Toluol), organische Säuren bzw. deren Salze (wie z.B. Ameisensäure, Natriumformiat, Ammoniumformiat), Alkohole (wie z.B. Isopropanol) sowie Phosphorverbindungen (wie z.B. Natriumhypophosphit). Es ist aber auch möglich, Gemische sich nicht störender vorgenannter Regler einzusetzen. Bei den Reglern handelt es sich im Allgemeinen um niedermolekulare Verbindungen mit einem Molgewicht kleiner 2000, insbesondere kleiner 1000 g/mol. Günstig ist es, wenn eine Teil- oder die Gesamtmenge der Regler dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren während der Polymerisation zugeführt werden.

Organische Verbindungen mit einer Thiolgruppe sind z.B. primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkylcarbonsäureester z.B. von C2- bis C4-Carbonsäuren mit 1 bis 18 C-Atomen in der Alkylgruppe, z.B. 2-Mercaptoethyl-propionat, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen. Bevorzugte organische Verbindungen, die Schwefel in gebundener Form enthalten sind insbesondere tert.-Butylmercaptan, Thioglycolsäureethylester, Mercaptoethanol, Mercaptopropyltrimethoxysilan, tert.-Do-decylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercapto-propan-1,2-diol, 1,4-Mercaptobutanol, Thioglykolsäure, 3-Mercaptopropionsäure, Mercaptobernsteinsäure, Thioessigsäure und Thioharnstoff. Besonders bevorzugte Thioverbindungen sind tert.-Butylmercaptan, Thioglycolsäureethylester, Mercaptoethanol, Mercaptopropyltrimethoxysilan oder tert.-Dodecylmercaptan.

Aliphatische und/oder araliphatische Halogenverbindungen sind z.B. n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid. Aliphatische und/oder aromatische Aldehyde sind z.B. Formaldehyd, Acetaldeyhd, Propionaldehyd und/oder Benzaldehyd.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet. Die Größenverteilung der Dispersionsteilchen kann monomodal, bimodal oder multimodal sein. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt. Die Glasübergangstemperatur des Haftklebstoffpolymers ist vorzugsweise kleiner 0 °C, besonders bevorzugt -60 bis -10 °C und ganz besonders bevorzugt -60 bis -20 °C. Die Glasübergangstemperatur lässt sich durch Differential Scanning Calorimetrie (z.B. ASTM 3418/82, sog. "midpoint temperature") bestimmen.

Eine erfindungsgemäße Haftklebstoffzusammensetzung enthält die Haftklebstoffpolymere vorzugsweise in Form der wässrigen Polymerdispersion, wie sie durch die Emulsionspolymerisation erhalten wurde oder erhältlich ist. Die Haftklebstoffzusammensetzungen können allein aus den Polymeren bzw. der wässrigen Dispersion der Polymeren bestehen. Der Haftklebstoff kann jedoch auch noch weitere Zusatzstoffe enthalten, z.B. Füllstoffe, Farbstoffe, Verlaufsmittel, Verdicker, vorzugsweise Assoziativverdicker, Entschäumer, Vernetzer, Weichmacher, Pigmente, Netzmittel oder Tackifier (klebrigmachende Harze). Tackifier sind z. B. aus Adhesive Age, Juli 1987, Seite 19-23 oder Polym. Mater. Sci. Eng. 61 (1989), Seite 588-592 bekannt. Für eine bessere Benetzung von Oberflächen können die Haftklebstoffe insbesondere Benetzungshilfsmittel (Netzmittel), z. B. Fettalkoholethoxylate, Alkylphenolethoxylate, Nonylphenolethoxylate, Polyoxyethylene/-propylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

Vorzugsweise enthält die Haftklebstoffzusammensetzung
60 - 95 Gewichtsteile Haftklebstoffpolymer,
5-40 Gewichtsteile Tackifier und
optional 0 - 10 Gewichtsteile weitere Bestandteile wie z.B. die oben genannten Netzmittel, Verdicker, Entschäumer, Vernetzer, etc..

Ein Tackifier ist ein polymerer oder oligomerer Zusatzstoffe für Klebstoffpolymere oder allgemein für Elastomere, der deren Autoadhäsion (Tack, Eigenklebrigkeit, Selbsthaftung) erhöht, sodass sie nach kurzem leichten Andruck fest auf Oberflächen haften. Tackifier sind z.B. Naturharze, wie Kolophoniumharze und deren durch Disproportionierung oder Isomerisierung, Polymerisation, Dimerisation, Hydrierung entstehenden Derivate oder Terpenharze. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, alpha-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 50000, insbesondere unter 30 000. Die Polyacrylate bestehen bevorzugt zu mindestens 60, insbesondere mindestens 80 Gew.-% aus C₁-C₈ Alkyl(meth)acrylaten. Geeignet sind z.B. die in der WO 2013/117428 beschriebenen niedrigmolekularen Polymerisate und Oligomere mit einem gewichtsmittleren Molekulargewicht von weniger als 50000 und einer Glasübergangstemperatur von größer oder gleich -40 °C bis kleiner oder gleich 0 °C, vorzugsweise von größer oder gleich -35°C, bis kleiner oder gleich 0 °C, herstellbar durch Emulsionspolymerisation in Gegenwart mindestens eines Molekulargewichtsreglers und herstellbar aus einem Monomergemisch enthaltend mindestens 40 Gew.% mindestens eines C1- bis C20-Alkyl(meth)acrylats.

Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Das Haftklebstoffpolymer bzw. die Haftklebstoffdispersion können zur Herstellung von selbstklebenden Artikeln verwendet werden. Die Artikel sind zumindest teilweise mit dem Haftklebstoff beschichtet. Vorzugsweise sind die selbstklebenden Artikel nach der Verklebung wiederabziehbar. Bei den selbstklebenden Artikeln kann es sich z.B. um Folien, Bänder oder Etiketten handeln. Geeignete Trägermaterialien sind z.B. Papier, Kunststofffolien und Metallfolien. Bei erfindungsgemäßen selbstklebenden Bändern kann es sich um einseitig oder beidseitig beschichtete Bänder aus den obigen Substanzen handeln. Besonders bevorzugt sind selbstklebende Etiketten. Bei erfindungsgemäßen selbstklebenden Etiketten kann es sich um Etiketten aus Papier oder einer thermoplastischen Folie handeln. Als thermoplastische Folie kommen z.B. Folien aus Polyolefinen (z.B. Polyethylen, Polypropylen), Polyolefincopolymeren, Folien aus Polyestern (z.B. Polyethylenterephtalat) oder Polyacetat in Betracht. Die Oberflächen der thermoplastischen Polymerfolien sind vorzugweise coronabehandelt. Die Etiketten sind einseitig mit Klebstoff beschichtet. Bevorzugte Substrate für die selbstklebenden Artikel sind Papier und Polymerfolien. Besonders bevorzugte selbstklebende Artikel sind Papieretiketten.

Die selbstklebenden Artikel sind auf mindestens einer Oberfläche zumindest teilweise mit einem erfindungsgemäßen Haftklebstoff beschichtet. Der Klebstoff kann nach üblichen Methoden wie Rollen, Rakeln oder Streichen auf die Artikel aufgetragen werden. Die Auftragsmenge beträgt bevorzugt 0,1 bis 30 g, besonders bevorzugt 2 bis 20 g Feststoff pro m². Nach dem Auftragen folgt im Allgemeinen ein Trocknungsschritt zur Entfernung des Wasser bzw. der Lösungsmittel. Das Wasser kann durch Trocknung bei z.B. 50 bis 150°C entfernt werden. Die so erhaltenen, beschichteten Substrate werden z.B. als Selbstklebeartikel, wie Etiketten, Klebebänder oder Folien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Bei den Substraten, auf welche die selbstklebenden Artikel vorteilhaft aufgebracht werden können, kann es sich z.B. um Metall, Holz, Glas, Papier oder Kunststoff handeln. Die selbstklebenden Artikel eignen sich insbesondere zum Verkleben auf Verpack-ungsoberflächen, Kartons, Kunststoffverpackungen, Bücher, Fenster, Kraftfahrzeugkarosserien oder Karosserieteilen. Bevorzugte Substrate sind selbstklebende Etiketten, insbesondere selbstklebende Papieretiketten und selbstklebende Folienetiketten. Das Trägermaterial ist Papier bzw. Polymerfolie und weist eine erste Oberfläche und eine zweite Oberfläche auf, wobei die erste Oberfläche selbstklebend ist und zumindest teilweise mit einem erfindungsgemäßen Haftklebstoff beschichtet ist und wobei die zweite Oberfläche bedruckt sein kann oder die zweite Oberfläche oder das Etikett zumindest teilweise gefärbt sein kann. Die Färbung kann z.B. durch eine farbige Beschichtung mit Pigmenten oder Farbstoffen, durch farbiges Bedrucken oder in Thermopapieren durch Wärmeeinwirkung erzeugt worden sein.

Die Erfindung betrifft auch die Verwendung der oben beschriebenen Haftklebstoffzusammensetzungen zur Verklebung von Substraten auf kalten und feuchten Oberflächen. Bei den Substraten handelt es sich vorzugsweise um selbstklebende Etiketten, insbesondere um selbstklebende Papier- oder Folienetiketten.

### Beispiele

Es werden folgende Abkürzungen verwendet:
- EHA:: 2-Ethylhexylacrylat
- EA:: Ethylacrylat
- BA:: n-Butylacrylat
- MA: Methylacrylat
- MMA: Methylmethacrylat
- VAc:: Vinylacetat
- S:: Styrol
- AA:: Acrylsäure
- t-DMK: tert.-Dodecylmercaptan

Es werden Emulsionspolymerisate eingesetzt, hergestellt aus den in Tabelle 1 genannten Monomeren. Die Mengenangaben sind Gewichtsteile. Die Beispiele V1 bis V5 sind Vergleichsbeispiele.

**Tabelle 1: Emulsionspolymerisate**

| Beispiel | EHA | BA | EA | MA | MMA | VAc | AA | S | t-DMK |
|---|---|---|---|---|---|---|---|---|---|
| A | 85 | 0 | 12 | 0 | 0 | 0 | 1 | 2 | 0,03 |
| V1 | 0 | 85 | 0 | 0 | 12 | 0 | 1 | 2 | 0 |
| V2 | 0 | 85 | 0 | 0 | 12 | 0 | 1 | 2 | 0,03 |
| B | 74 | 0 | 23 | 0 | 0 | 0 | 1 | 2 | 0,03 |
| V3 | 85 | 0 | 0 | 0 | 12 | 0 | 1 | 2 | 0 |
| C | 76 | 0 | 12 | 0 | 9 | 0 | 1 | 2 | 0,03 |
| V4 | 85 | 0 | 12 | 0 | 2 | 0 | 1 | 0 | 0,04 |
| V5 | 72 | 0 | 0 | 20 | 0 | 5 | 1 | 2 | 0 |
| D | 85 | 0 | 0 | 12 | 0 | 0 | 1 | 2 | 0,05 |
| E | 80 | | 12 | | | 5 | 1 | 2 | 0,04 |

### Anwendungstechnische Prüfung

### Quickstick auf kalten und feuchten Oberflächen

Bei der Bestimmung des Quickstick (Oberflächenklebrigkeit, auch Loop Tack genannt) wird im Allgemeinen die Kraft bestimmt, die ein auf ein Trägermaterial aufgebrachter Klebstoff durch Verklebung ohne Druck auf ein Substrat bei einer definierten Abzugsgeschwindigkeit dem Abziehen vom Substrat entgegensetzt. Bei der Bestimmung des Quickstick auf kalten & feuchten Oberflächen handelt es sich um eine angepasste Prüfmethode in Anlehnung an FTM 1 (FINAT Testmethode 1). Trägermaterial ist Etikettenpapier 75 g/m², Prüfsubstrat ist HDPE (High Density Polyethylen). Die zu prüfenden Polymerdispersionen werden zunächst mit Natriumhydroxid (10 Gew.%-Lösung) auf pH=6,5 eingestellt und mit 0,5% Lumiten® I-SC (Emulgator, 56 Gew.%-Lösung) versetzt. Die Klebstoffformulierungen werden bei Raumtemperatur mindestens 16 Stunden gereift. Anschließend werden im Transferbeschichtungsverfahren entsprechende Laminate mit einem Klebstoff-Auftragsgewicht von 20 g/m² hergestellt. Aus dem mit Klebstoff beschichteten Träger wird ein Prüfstreifen in 25 mm Breite und 250 mm Länge geschnitten und mindestens 16 Stunden bei Normklima (23°C, 50% rel. Luftfeuchte) gelagert. Die beiden Enden des Prüfstreifens werden auf ca. 1 cm Länge mit der Klebeseite nach innen umgeklappt. Aus dem Klebstreifen wird eine Schlaufe mit der Klebseite nach außen gebildet, die beiden Enden zusammengefasst und in die obere Klemme einer Zugprüfmaschine eingespannt. In die untere Klemme wird die Prüfsubstrathalterung eingespannt. Das HDPE-Prüfsubstrat wird mindestens 1 Stunde bei -5°C in der Tiefkühltruhe gelagert. Das gekühlte Prüfsubstrat wird entnommen und umgehend in die Prüfsubstrathalterung der im Normklimaraum (23°C, 50% rel. Luftfeuchte) befindlichen Zugprüfmaschine eingelegt. Unter den beschriebenen Bedingungen bildet sich ein feiner Kondensationsfilm aus Wasser auf der kalten HDPE-Oberfläche. 15 Sekunden nach Entnahme aus der Tiefkühltruhe wird der Quickstick-Prüfzyklus gestartet. Die Klebestreifenschlaufe wird durch die Zugprüfmaschine mit einer Geschwindigkeit von 300 mm/Minute nach unten gefahren, sodass die Klebseite des Prüfstreifens mit dem Substrat ohne zusätzlichen Druck verklebt. Die Zugprüfmaschine wird gestoppt und sofort wieder nach oben gefahren, wenn sich die Unterkante der oberen Klemme 40 mm über dem Substrat befindet. Die Angabe des Prüfergebnisses erfolgt in N/25 mm Breite. Es wird der höchste Wert der Anzeige (Fmax) als Maß der Oberflächenklebrigkeit abgelesen. Aus drei Einzelergebnissen wird ein Mittelwert gebildet.

**Tabelle 2: Testergebnisse**

| Beispiel | Quickstick kalt & feucht [N/25mm] |
|---|---|
| A | 6,5 |
| V1 | 0,2 |
| V2 | 0,2 |
| B | 4,6 |
| V3 | 1,2 |
| C | 6,0 |
| V4 | 2,0 |
| V5 | 1,2 |
| D | 5,5 |
| E | 4,6 |

Die erfindungsgemäßen Beispiele A bis E zeigen deutlich erhöhte Werte für den Quickstick gegenüber Beispielen mit n-Butylacrylat (V1, V2), gegenüber Beispielen ohne Molekulargewichtsregler (V3, V5) und gegenüber Beispielen ohne Styrol (V4).

## Patentansprüche

1. Verfahren zum Kleben eines Substrates auf Oberflächen, wobei
(1) eine Haftklebstoffzusammensetzung zur Verfügung gestellt wird, welche mindestens ein Haftklebstoffpolymer enthält, welches gebildet ist aus
(i) 50 - 95 Gew.-% 2-Ethylhexylacrylat,
(ii) 1 - 25 Gew.% mindestens eines Monomers, ausgewählt aus C1 bis C2 Alkyl-(meth)acrylaten,
(iii) 1 - 10 Gew.% Styrol,
(iv) 0,1 - 5 Gew.% mindestens einer ethylenisch ungesättigten Säure oder mindestens eines ethylenisch ungesättigten Säureanhydrids,
(v) 0 bis 10 Gew.% weiteren, von den Monomeren (i) bis (iv) verschiedenen ethylenisch ungesättigten Verbindungen,
wobei sich die Mengenangaben der Monomere jeweils auf die Gesamtmenge an Monomeren beziehen
und wobei die Polymerisation der Monomere in Gegenwart von mindestens 0,01 Gewichtsteilen Molekulargewichtsregler pro 100 Gewichtsteile Monomere erfolgt;
(2) die Haftklebstoffzusammensetzung auf ein Substrat aufgebracht wird und
(3) das Substrat auf eine Oberfläche aufgebracht wird, dessen Oberflächentemperatur niedriger ist als die Taupunkttemperatur der mit der Oberfläche in Kontakt stehenden Luft.

2. Verfahren gemäß dem vorhergehenden Anspruch, **dadurch gekennzeichnet, dass** es sich bei dem mit der Haftklebstoffzusammensetzung beschichteten Substrat um ein selbstklebendes Etikett handelt.

3. Verfahren gemäß dem vorhergehenden Anspruch, **dadurch gekennzeichnet, dass** es sich bei dem Etikett um ein selbstklebendes Papier- oder Folienetikett handelt.

4. Verfahren gemäß einem der vorhergehenden Ansprüche, **dadurch gekennzeichnet, dass** die Oberflächentemperatur mindestens 5 °C niedriger ist als die Taupunkttemperatur der mit der Oberfläche in Kontakt stehenden Luft.

5. Verfahren gemäß einem der vorhergehenden Ansprüche, **dadurch gekennzeichnet, dass** die Haftklebstoffzusammensetzung
60 - 95 Gewichtsteile Haftklebstoffpolymer und
5 - 40 Gewichtsteile Tackifier enthält.

6. Haftklebstoffzusammensetzung, verwendbar in dem Verfahren gemäß Ansprüchen 1 bis 5, in Form einer wässrigen Polymerdispersion, welche mindestens ein Haftklebstoffpolymer enthält, welches gebildet ist aus
(i) 50 - 95 Gew.-% 2-Ethylhexylacrylat,
(ii) 1 - 25 Gew.% mindestens eines Monomers, ausgewählt aus C1 bis C2 Alkyl-(meth)acrylaten,
(iii) 1 - 10 Gew.% Styrol,
(iv) 0,1 - 5 Gew.% mindestens einer ethylenisch ungesättigten Säure oder mindestens eines ethylenisch ungesättigten Säureanhydrids,
(v) 0 bis 10 Gew.% weiteren, von den Monomeren (i) bis (iv) verschiedenen ethylenisch ungesättigten Verbindungen,
wobei sich die Mengenangaben der Monomere jeweils auf die Gesamtmenge an Monomeren beziehen
und wobei die Polymerisation der Monomere in Gegenwart von mindestens 0,01 Gewichtsteilen Molekulargewichtsregler pro 100 Gewichtsteile Monomere erfolgt.

7. Haftklebstoffzusammensetzung gemäß dem vorhergehenden Anspruch, **dadurch gekennzeichnet, dass** das Gewichtsverhältnis von 2-Ethylhexylacrylat zu Monomeren (ii) von 2:1 bis 8:1 beträgt.

8. Haftklebstoffzusammensetzung gemäß einem der beiden vorhergehenden Ansprüche, **dadurch gekennzeichnet, dass** das Haftklebstoffpolymer gebildet ist aus
(i) 70 - 90 Gew.-% 2-Ethylhexylacrylat,
(ii) 10-25 Gew.% mindestens eines Monomers, ausgewählt aus Ethylacrylat, Methylacrylat und Methylmethacrylat,
(iii) 1 - 10 Gew.% Styrol,
(iv) 0,2 - 3 Gew.% mindestens einer ethylenisch ungesättigten Säure ausgewählt aus Acrylsäure, Methacrylsäure und deren Gemisch, und
(v) 0 bis 10 Gew.% anderer, von den Monomeren (i) bis (iv) verschiedener ethylenisch ungesättigter Verbindungen.

9. Haftklebstoffzusammensetzung nach einem der Ansprüche 6 bis 8, **dadurch gekennzeichnet, dass** die weiteren ethylenisch ungesättigten Verbindungen (v) ausgewählt sind aus der Gruppe bestehend aus von 2-Ethylhexylacrylat verschiedenen C3 bis C20 Alkyl(meth)acrylaten, Hydroxylgruppen enthaltende Monomere, Vinylestern von bis zu 20 C-Atome enthaltenden Carbonsäuren, von Styrol verschiedenen Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen.

10. Haftklebstoffzusammensetzung nach einem der Ansprüche 6 bis 9, **dadurch gekennzeichnet, dass** die Haftklebstoffzusammensetzung
60 - 95 Gewichtsteile Haftklebstoffpolymer und
5 - 40 Gewichtsteile Tackifier enthält.

11. Verwendung einer Haftklebstoffzusammensetzung gemäß einem der Ansprüche 6 bis 10 zur Verklebung von Substraten auf Oberflächen, deren Oberflächentemperatur niedriger ist als die Taupunkttemperatur der mit der Oberfläche in Kontakt stehenden Luft.

12. Verwendung gemäß dem vorhergehenden Anspruch, **dadurch gekennzeichnet, dass** es sich bei dem Substrat um ein selbstklebendes Etikett handelt.

13. Verwendung gemäß dem vorhergehenden Anspruch, **dadurch gekennzeichnet, dass** es sich bei dem Etikett um ein selbstklebendes Papier- oder Folienetikett handelt.

## Claims

1. A method for bonding a substrate to a surface, in which
(1) a pressure-sensitive adhesive composition is provided which comprises at least one pressure-sensitive adhesive polymer which is formed from
(i) 50 - 95 wt% of 2-ethylhexyl acrylate,
(ii) 1 - 25 wt% of at least one monomer selected from C1 to C2 alkyl (meth)acrylates,
(iii) 1 - 10 wt% of styrene,
(iv) 0.1 - 5 wt% of at least one ethylenically unsaturated acid or at least one ethylenically unsaturated acid anhydride,
(v) 0 to 10 wt% of further ethylenically unsaturated compounds different from the monomers (i) to (iv),
the amount figures of the monomers being based in each case on the total amount of monomers,
and the polymerization of the monomers taking place in the presence of at least 0.01 part by weight of chain transfer agent per 100 parts by weight of monomers;
(2) the pressure-sensitive adhesive composition is applied to a substrate; and
(3) the substrate is applied to a surface whose surface temperature is lower than the dewpoint temperature of the air in contact with the surface.

2. The method according to the preceding claim, wherein the substrate coated with the pressure-sensitive adhesive composition is a self-adhesive label.

3. The method according to the preceding claim, wherein the label is a self-adhesive paper or film label.

4. The method according to any of the preceding claims, wherein the surface temperature is at least 5°C lower than the dewpoint temperature of the air in contact with the surface.

5. The method according to any of the preceding claims, wherein the pressure-sensitive adhesive composition comprises
60 - 95 parts by weight of pressure-sensitive adhesive polymer and
5 - 40 parts by weight of tackifier.

6. A pressure-sensitive adhesive composition which can be used in the method according to claims 1 to 5, in the form of an aqueous polymer dispersion which comprises at least one pressure-sensitive adhesive polymer which is formed from
(i) 50 - 95 wt% of 2-ethylhexyl acrylate,
(ii) 1 - 25 wt% of at least one monomer selected from C1 to C2 alkyl (meth)acrylates,
(iii) 1 - 10 wt% of styrene,
(iv) 0.1 - 5 wt% of at least one ethylenically unsaturated acid or at least one ethylenically unsaturated acid anhydride,
(v) 0 to 10 wt% of further ethylenically unsaturated compounds different from the monomers (i) to (iv),
the amount figures of the monomers being based in each case on the total amount of monomers,
and the polymerization of the monomers taking place in the presence of at least 0.01 part by weight of chain transfer agent per 100 parts by weight of monomers.

7. The pressure-sensitive adhesive composition according to the preceding claim, wherein the weight ratio of 2-ethylhexyl acrylate to monomers (ii) is from 2:1 to 8:1.

8. The pressure-sensitive adhesive composition according to either of the two preceding claims, wherein the pressure-sensitive adhesive polymer is formed from
(i) 70 - 90 wt% of 2-ethylhexyl acrylate,
(ii) 10 - 25 wt% of at least one monomer selected from ethyl acrylate, methyl acrylate, and methyl methacrylate,
(iii) 1 - 10 wt% of styrene,
(iv) 0.2 - 3 wt% of at least one ethylenically unsaturated acid selected from acrylic acid, methacrylic acid, and a mixture thereof, and
(v) 0 to 10 wt% of other ethylenically unsaturated compounds different from the monomers (i) to (iv).

9. The pressure-sensitive adhesive composition according to any of claims 6 to 8, wherein the further ethylenically unsaturated compounds (v) are selected from the group consisting of C3 to C20 alkyl (meth)acrylates other than 2-ethylhexyl acrylate, monomers comprising hydroxyl groups, vinyl esters of carboxylic acids comprising up to 20 C atoms, vinyl aromatics other than styrene having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds.

10. The pressure-sensitive adhesive composition according to any of claims 6 to 9, wherein the pressure-sensitive adhesive composition comprises
60 - 95 parts by weight of pressure-sensitive adhesive polymer and
5 - 40 parts by weight of tackifier.

11. The use of a pressure-sensitive adhesive composition according to any of claims 6 to 10 for bonding a substrate to a surface whose surface temperature is lower than the dewpoint temperature of the air in contact with the surface.

12. The use according to the preceding claim, wherein the substrate is a self-adhesive label.

13. The use according to the preceding claim, wherein the label is a self-adhesive paper or film label.

## Revendications

1. Procédé de collage d'un substrat sur des surfaces, selon lequel
(1) une composition adhésive de contact est mise à disposition, qui contient au moins un polymère adhésif de contact, qui est formé par :
(i) 50 à 95 % en poids d'acrylate de 2-éthylhexyle,
(ii) 1 à 25 % en poids d'au moins un monomère, choisi parmi les (méth)acrylates d'alkyle en C1 à C2,
(iii) 1 à 10 % en poids de styrène,
(iv) 0,1 à 5 % en poids d'au moins un acide éthyléniquement insaturé ou d'au moins un anhydride d'acide éthyléniquement insaturé,
(v) 0 à 10 % en poids de composés éthyléniquement insaturés supplémentaires, différents des monomères (i) à (iv),
les données de quantité des monomères se rapportant à chaque fois à la quantité totale de monomères,
et la polymérisation des monomères ayant lieu en présence d'au moins 0,01 partie en poids de régulateurs du poids moléculaire pour 100 parties en poids de monomères ;
(2) la composition adhésive de contact est appliquée sur un substrat, et
(3) le substrat est appliqué sur une surface, dont la température de surface est inférieure à la température de point de rosée de l'air qui est en contact avec la surface.

2. Procédé selon la revendication précédente, **caractérisé en ce que** le substrat revêtu avec la composition adhésive de contact est une étiquette autocollante.

3. Procédé selon la revendication précédente, **caractérisé en ce que** l'étiquette est une étiquette en papier ou film autocollante.

4. Procédé selon l'une quelconque des revendications précédentes, **caractérisé en ce que** la température de surface est au moins 5 °C inférieure à la température de point de rosée de l'air qui est en contact avec la surface.

5. Procédé selon l'une quelconque des revendications précédentes, **caractérisé en ce que** la composition adhésive de contact contient :
60 à 95 parties en poids d'un polymère adhésif de contact et
5 à 40 parties en poids d'un agent collant.

6. Composition adhésive de contact, pouvant être utilisée dans le procédé selon les revendications 1 à 5, sous la forme d'une dispersion aqueuse de polymère, qui contient au moins un polymère adhésif de contact, qui est formé par :
(i) 50 à 95 % en poids d'acrylate de 2-éthylhexyle,
(ii) 1 à 25 % en poids d'au moins un monomère, choisi parmi les (méth)acrylates d'alkyle en C1 à C2,
(iii) 1 à 10 % en poids de styrène,
(iv) 0,1 à 5 % en poids d'au moins un acide éthyléniquement insaturé ou d'au moins un anhydride d'acide éthyléniquement insaturé,
(v) 0 à 10 % en poids de composés éthyléniquement insaturés supplémentaires, différents des monomères (i) à (iv),
les données de quantité des monomères se rapportant à chaque fois à la quantité totale de monomères,
et la polymérisation des monomères ayant lieu en présence d'au moins 0,01 partie en poids de régulateurs du poids moléculaire pour 100 parties en poids de monomères.

7. Composition adhésive de contact selon la revendication précédente, **caractérisée en ce que** le rapport en poids entre l'acrylate de 2-éthylhexyle et les monomères (ii) est de 2:1 à 8:1.

8. Composition adhésive de contact selon l'une quelconque des deux revendications précédentes, **caractérisée en ce que** le polymère adhésif de contact est formé par :
(i) 70 à 90 % en poids d'acrylate de 2-éthylhexyle,
(ii) 10 à 25 % en poids d'au moins un monomère, choisi parmi l'acrylate d'éthyle, l'acrylate de méthyle et le méthacrylate de méthyle,
(iii) 1 à 10 % en poids de styrène,
(iv) 0,2 à 3 % en poids d'au moins un acide éthyléniquement insaturé choisi parmi l'acide acrylique, l'acide méthacrylique et leur mélange,
(v) 0 à 10 % en poids d'autres composés éthyléniquement insaturés, différents des monomères (i) à (iv).

9. Composition adhésive de contact selon l'une quelconque des revendications 6 à 8, **caractérisée en ce que** les composés éthyléniquement insaturés supplémentaires (v) sont choisis dans le groupe constitué par les (méth)acrylates d'alkyle en C3 à C20 différents de l'acrylate de 2-éthylhexyle, les monomères contenant des groupes hydroxyle, les esters de vinyle d'acides carboxyliques contenant jusqu'à 20 atomes C, les composés aromatiques de vinyle différents du styrène contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons.

10. Composition adhésive de contact selon l'une quelconque des revendications 6 à 9, **caractérisée en ce que** la composition adhésive de contact contient :
60 à 95 parties en poids d'un polymère adhésif de contact et
5 à 40 parties en poids d'un agent collant.

11. Utilisation d'une composition adhésive de contact selon l'une quelconque des revendications 6 à 10 pour le collage de substrats sur des surfaces, dont la température de surface est inférieure à la température de point de rosée de l'air qui est en contact avec la surface.

12. Utilisation selon la revendication précédente, **caractérisée en ce que** le substrat est une étiquette autocollante.

13. Utilisation selon la revendication précédente, **caractérisée en ce que** l'étiquette est une étiquette en papier ou film autocollante.
